# EUROPEAN PATENT APPLICATION

(11) **EP 2 846 567 A1**
(43) Date of publication of application: **11.03.2015**
(21) Application number: 14180971.5
(22) Date of filing: 14.08.2014
(51) Int. Cl.: H04W 8/00, H04W 92/18

(54) **Method and apparatus for device to device discovery in a wireless communication system**

(30) Priority: 19.08.2013 US 201361867251 P
(71) Applicant: Innovative Sonic Corporation, Taipei City 10049 (TW)
(72) Inventor: Kuo, Richard Lee-Chee, 10049 Taipei City (TW)
(74) Representative: Hoefer & Partner

(57) **Abstract**

A method and apparatus are disclosed for device to device discovery in a wireless communication system. The method includes a UE (User Equipment) receiving information included in a system information message broadcasted by a cell (505). The method also includes the UE finds, based on the information, a neighboring cell which provides resources for D2D discovery (510).

## Description

### CROSS-REFERENCE TO RELATED APPLICATIONS

The present Application claims the benefit of U.S. Provisional Patent Application Serial No. 61/867,251 filed on August 19, 2013, the entire disclosure of which is incorporated herein by reference.

### FIELD

This disclosure generally relates to wireless communication networks, and more particularly, to a method and apparatus for device to device discovery in a wireless communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

### SUMMARY

Methods and apparatus are disclosed for device to device discovery in a wireless communication system and are defined in independent claims 1, 4, 10, and 11, respectively. The respective dependent claims define preferred embodiments thereof, respectively. The method according to one aspect includes a UE (User Equipment) receiving information included in a system information message broadcasted by a cell. This method also includes the UE finds, based on the information, a neighboring cell which provides resources for D2D (Device to Device) discovery.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 illustrates a flow chart according to one exemplary embodiment.
FIG. 6 illustrates a flow chart according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to support one or more standards such as the standard offered by a consortium named "3rd Generation Partnership Project" referred to herein as 3GPP, including Document Nos. SP-110638, "WID on Proposal for a study on Proximity-based Services"; TR 22.803-c20, "Feasibility Study for Proximity Services (ProSe)"; and R2-132526, "Resource Configuration & Selection for D2D Direct Discovery". The standards and documents listed above are hereby expressly incorporated herein.

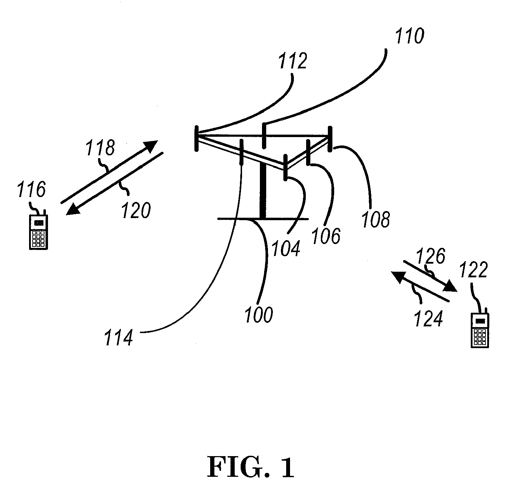

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an eNodeB, or some other terminology. An access terminal (AT) may also be called user equipment (UE), a wireless communication device, terminal, access terminal or some other terminology.

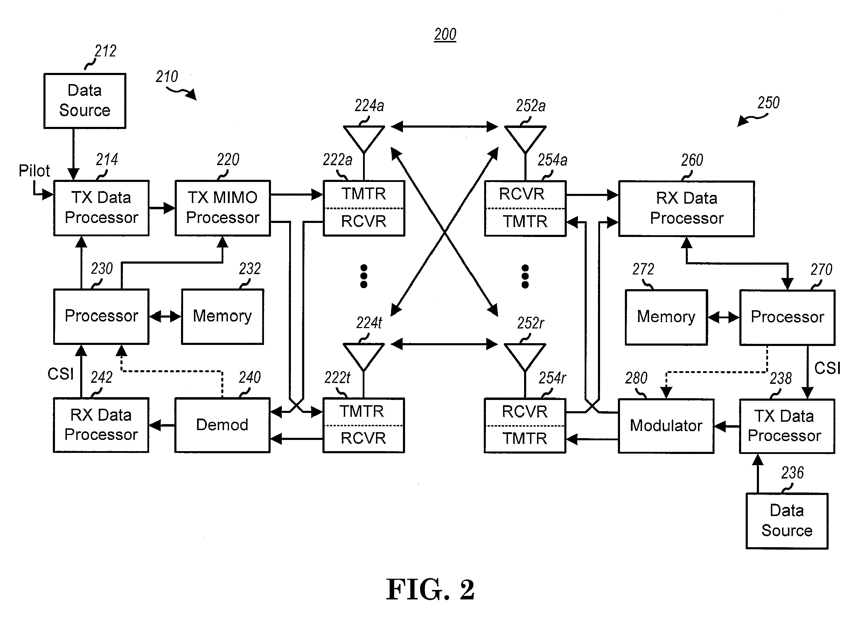

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

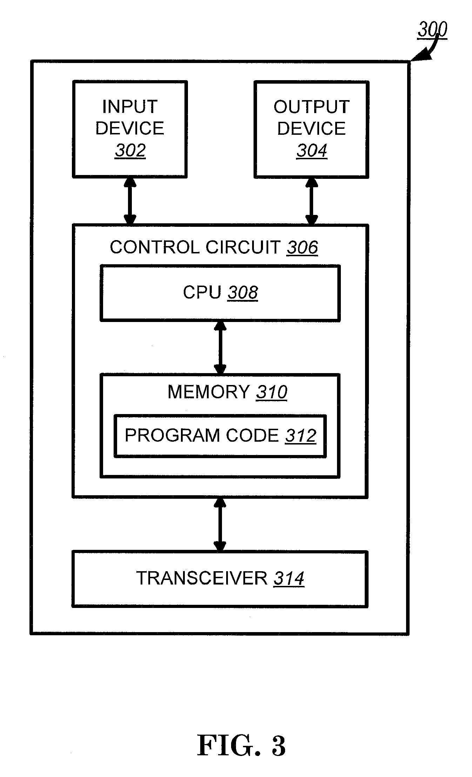

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly.

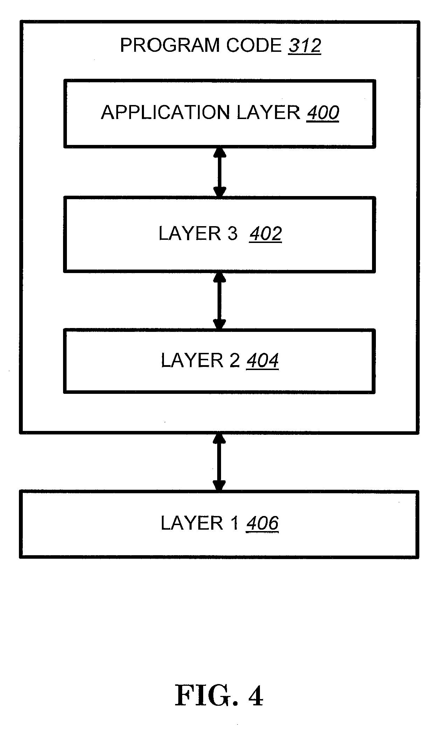

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

In general, 3GPP SP-110638 proposes a new study item on proximity-based services (ProSe). The justification and objective of this study item are described in 3GPP SP-110638 as follows:

### 3 Justification

Proximity-based applications and services represent a recent and enormous socio-technological trend. The principle of these applications is to discover instances of the applications running in devices that are within proximity of each other, and ultimately also exchange application-related data. In parallel, there is interest in proximity-based discovery and communications in the public safety community.

Current 3GPP specification are only partially suited for such needs, since all such traffic and signalling would have to be routed in the network, thus impacting their performance and adding un-necessary load in the network. These current limitations are also an obstacle to the creation of even more advanced proximity-based applications.

In this context, 3GPP technology, has the opportunity to become the platform of choice to enable proximity-based discovery and communication between devices, and promote a vast array of future and more advanced proximity-based applications.

### 4 Objective

The objective is to study use cases and identify potential requirements for an operator network controlled discovery and communications between devices that are in proximity, under continuous network control, and are under a 3GPP network coverage, for:
1. Commercial/social use
2. Network offloading
3. Public Safety
4. Integration of current infrastructure services, to assure the consistency of the user experience including reachability and mobility aspects
   Additionally, the study item will study use cases and identify potential requirements for
5. Public Safety, in case of absence of EUTRAN coverage (subject to regional regulation and operator policy, and limited to specific public-safety designated frequency bands and terminals)
Use cases and service requirements will be studied including network operator control, authentication, authorization, accounting and regulatory aspects. The study does not apply to GERAN or UTRAN.

In addition, 3GPP TR 22.803-c20 discusses use cases and identifies potential requirements for operator network controlled discovery and communications between UEs that are in proximity. 3GPP TR 22.803-c20 defines a ProSe (Proximity-based Service) discovery, which contains an open [ProSe] discovery and a restricted [ProSe] discovery as follows:

### 3.1 Definitions

....
**ProSe Discovery:** a process that identifies that a UE is in proximity of another, using E-UTRA.
**Open [ProSe] Discovery:** is ProSe Discovery without explicit permission from the UE being discovered.
....
**Restricted [ProSe] Discovery:** is ProSe Discovery that only takes place with explicit permission from the UE being discovered.
....

Furthermore, 3GPP R2-132526 discusses resource configuration and selection for device to device (D2D) direct discovery (i.e., ProSe discovery). To support direct D2D (Device to Device) discovery service, 3GPP R2-132526 proposes to broadcast D2D discovery resource configuration in a system information (SI) message. Other new information could be added to the system information to enhance the D2D discovery.

In general, it is not necessary for a network to provide the D2D discovery resources on all frequency layers. In this situation, if a UE is camping on/connecting to a cell without D2D discovery resources, how this UE gets the D2D discovery service would need to be considered.

R2-132526 has the general viewpoint that D2D-enabled UEs should be able to perform D2D discovery irrespective of their RRC states. If a UE is in idle mode, the UE would need to search for a cell with D2D discovery resources if the UE wants to perform D2D discovery. To reduce the cell searching time, according to the invention, it is beneficial for a cell without D2D discovery resources to include information (such as the carrier frequency of a neighboring cell) in the cell's system information message for directing UEs to find a neighboring cell providing resources for D2D discovery.

In one embodiment, the SI message used for transmitting the D2D discovery resource configuration could be same as the SI message used for transmitting the carrier frequency of the neighboring cell. In another embodiment, these two SI messages could be different.

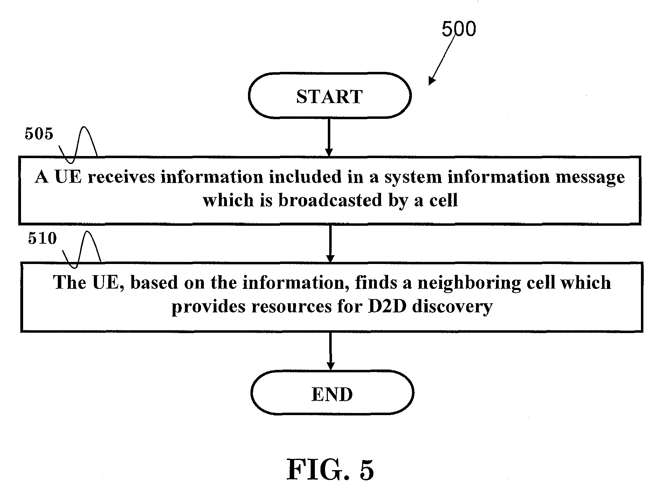

FIG. 5 is a flow chart 500 in accordance with one exemplary embodiment according to the invention. In Step 505, a UE (User Equipment) receives information included in a system information message broadcasted by a cell. In Step 510, based on the information, the UE finds a neighboring cell which provides resources for D2D discovery. In one preferred embodiment thereof, the information contains a carrier frequency of the neighboring cell.

In one further preferred embodiment thereof, which might preferably be combined with the preferred embodiment thereof, a D2D discovery resource configuration is included in a system information message broadcasted by the neighboring cell. Also further preferably, the UE transmits (or receives) a D2D discovery signal based on the D2D discovery resource configuration to be discovered by other UEs in proximity (or to discover other UEs in proximity). Furthermore, the D2D discovery signal could include or contain an identity of the UE and/or an identity of an application running on the UE and requesting for D2D discovery service. The D2D discovery signal could also include or contain service information indicating a service requested or offered by the UE or an application running on the UE and requesting for D2D discovery service.

Referring back to FIGs. 3 and 4, in one embodiment, the device 300 could include a program code 312 stored in memory 310 for performing device to device (D2D) discovery in a wireless communication system. The CPU 308 could execute the program code 312 to enable the UE (i) to receive information included in a system information message broadcasted by a cell, and (ii) to find, based on the information, a neighboring cell which provides resources for D2D discovery. In addition, the CPU 308 could execute the program code 312 to perform all of the above-described actions and steps or others described herein, in particular those of the exemplary embodiment described in paragraphs [0036] and [0037] above.

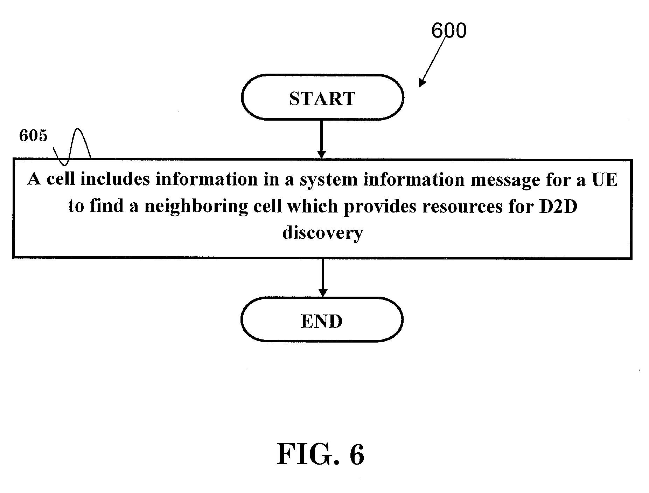

FIG. 6 is a flow chart 600 in accordance with one further exemplary embodiment according to the invention. In Step 605, a cell includes information in a system information message for a UE to find a neighboring cell which provides resources for D2D discovery. In one preferred embodiment thereof, the information in the system information message contains a carrier frequency of the neighboring cell. Furthermore, alternatively or additionally, preferably a D2D discovery resource configuration is included in a system information message broadcasted by the neighboring cell.

Referring back to FIGs. 3 and 4, in one embodiment, the device 300 could include a program code 312 stored in memory 310 for supporting device to device (D2D) discovery in a wireless communication system. The CPU 308 could execute the program code 312 to enable a cell to include information in a system information message for a UE to find a neighboring cell which provides resources for D2D discovery, in particular those of the further exemplary embodiment described in paragraph [0039] above.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for supporting device to device, in the following also referred to as D2D, discovery, comprising:
a cell includes information in a system information message for a User Equipment, in the following also referred to as UE, to find a neighboring cell which provides resources for D2D discovery (605).

2. The method of claim 1, wherein the information contains a carrier frequency of the neighboring cell.

3. The method of claim 1 or 2, further comprising:
a D2D discovery resource configuration is included in a system information message which is broadcast by the neighboring cell.

4. A method for performing device to device, in the following also referred to as D2D, discovery, comprising:
a User Equipment, in the following also referred to as UE, receives information included in a system information message which is broadcasted by a cell (505); and
based on the information, the UE finds a neighboring cell which provides resources for D2D discovery (510).

5. The method of claim 4, wherein the information contains a carrier frequency of the neighboring cell.

6. The method of claim 4 or 5, further comprising:
a D2D discovery resource configuration is included in a system information message which is broadcast by the neighboring cell.

7. The method of claim 6, wherein the UE transmits a D2D discovery signal based on the D2D discovery resource configuration to be discovered by other UEs in proximity, or wherein the UE receives a D2D discovery signal based on the D2D discovery resource configuration to discover other UEs in proximity.

8. The method of claim 7, wherein the D2D discovery signal contains an identity of the UE and/or an identity of an application running on the UE and requesting for D2D discovery service.

9. The method of claim 7, wherein the wherein the D2D discovery signal contains service information indicating a service requested or offered by the UE or an application running on the UE and requesting for D2D discovery service.

10. A communication device (300) for performing device to device, in the following also referred to as D2D, discovery in a wireless communication system, the communication device (300) comprising:
a control circuit (306);
a processor (308) installed in the control circuit (306);
a memory (310) installed in the control circuit (306) and operatively coupled to the processor (308);
wherein the processor (308) is configured to execute a program code (312) stored in the memory (310) to enable a User Equipment, in the following also referred to as UE, to perform the method steps as defined in anyone of claims 4 to 9.

11. A communication device (300) for supporting device to device, in the following also referred to as D2D, discovery in a wireless communication system, the communication device (300) comprising:
a control circuit (306);
a processor (308) installed in the control circuit (306);
a memory (310) installed in the control circuit (306) and operatively coupled to the processor (308);
wherein the processor (308) is configured to execute a program code (312) stored in the memory (310) to enable a cell to perform the method steps as defined in anyone of claims 1 to 3.
